# DEMANDE DE BREVET EUROPEEN

(11) **EP 2 143 588 A1**
(43) Date de publication de la demande: **13.01.2010**
(21) Numéro de dépôt: 09305658.8
(22) Date de dépôt: 08.07.2009
(51) Int. Cl.: B60P 7/13, B60P 1/64

(54) **Dispositif de fixation et de verrouillage en position d'une carrosserie sur le chassis d'un véhicule porteur, remorque et semi-remorque**

(30) Priorité: 09.07.2008 FR 0854659
(71) Demandeur: F.B.I., 42600 Champdieu (FR)
(72) Inventeur: Bourrin, Rodolphe, 69740 Genas (FR)
(74) Mandataire: Dupuis, François

(57) **Abrégé**

Ce dispositif de fixation et de verrouillage comprend un mécanisme qui est disposé fixement derrière la cabine (C) du véhicule porteur à l'avant de la remorque ou semi remorque, et qui est apte à permettre la réception de la carrosserie (B) sur le châssis (FC) du véhicule (V), la carrosserie et le châssis étant agencés avec des moyens complémentaires de verrouillage (1-3) entre eux, le mécanisme autorisant par des mouvements successifs à la verticale le positionnement de la carrosserie sur le châssis, et transversal pour le verrouillage en position de la carrosserie, la carrosserie étant agencée avec la réception d'un moyen (T) d'accouplement et de traction avec le mécanisme de commande.

## Description

L'invention se rattache au secteur technique des véhicules industriels porteurs et tracteurs transporteurs de carrosseries pour des usages les plus divers.

Selon l'art antérieur, le positionnement carrosseries et des bennes en particulier sur un véhicule porteur du type camion, remorque ou semi remorque, reste une opération complexe et requiert l'utilisation de plusieurs vérins en avant et en arrière qui sont intégrés sur le faux châssis du véhicule et qui, par le déploiement de leur tige à la verticale, entraînent le soulèvement ou l'abaissement de la carrosserie et son positionnement. L'intégration de ces vérins dans le volume du châssis reste complexe à réaliser, entraîne des difficultés d'accès en vue de la maintenance, et des conditions d'intervention peu aisées nécessitant d'être en porte-à-faux avec les directives techniques déterminées par les constructeurs. En outre, il n'y a aucune adaptabilité de la carrosserie ou de changement de celle-ci d'un camion à un autre, sauf à être remplacée par une carrosserie identique. Des moyens de verrouillage sont nécessaires pour assurer la liaison et la fixation de la carrosserie sur le châssis. Par ailleurs, l'utilisation de vérins latéraux disposés intérieurement ou extérieurement au châssis pour permettre le déplacement longitudinal de la benne est connue avec un coût de mise en oeuvre élevé.

Tout cela génère des inconvénients importants à l'usage avec toujours une utilisation d'un type de carrosserie par véhicule porteur.

La démarche du Demandeur a donc été de s'intéresser à la conception d'un nouveau type de liaison et de positionnement des carrosseries sur le véhicule porteur, remorque ou semi-remorque qui soit d'abord d'une manipulation plus simple, avec des conditions de maintenance améliorées.

Un autre but recherché par le Demandeur était de concevoir un dispositif de fixation des carrosseries sur le châssis de véhicule en permettant le cas échéant et si nécessaire aux besoins un changement de carrosseries dans sa gamme, ou de constructeurs.

Un autre but recherché par le Demandeur a été d'améliorer les conditions d'accès au dispositif de commande de fixation de la carrosserie sur le châssis du véhicule en améliorant les conditions d'intervention pour les opérateurs en maintenance.

Ces buts et d'autres encore ressortiront bien de la suite de la description.

La solution apportée par l'invention répond parfaitement à ces objectifs en offrant par son concept une quasi universalité dans les possibilités d'interchangeabilité de tous types de carrosseries sur le véhicule tracteur.

Selon une première caractéristique de l'invention, le dispositif de fixation et de verrouillage en position de carrosserie sur le châssis d'un véhicule porteur, remorque ou semi remorque est remarquable en ce qu'il comprend un mécanisme qui est disposé fixement derrière la cabine du véhicule porteur ou à l'avant de la remorque ou semi-remorque et qui est apte à permettre la réception de la carrosserie sur le châssis du véhicule, la carrosserie et le châssis étant agencés avec des moyens complémentaires de verrouillage entre eux, le mécanisme autorisant par des mouvements successifs à la verticale le positionnement de la carrosserie sur le châssis, et transversal pour le verrouillage en position de la carrosserie, la carrosserie étant agencée avec la réception d'un moyen d'accouplement et de traction avec le mécanisme de commande.

Ces caractéristiques et d'autres encore ressortiront bien de la suite de la description.

Pour fixer l'objet de l'invention illustrée d'une manière non limitative aux figures des dessins où :
- les figures 1A, 1B, 1C et 1D illustrent schématiquement les différentes phases de positionnement de la carrosserie sur le châssis du véhicule porteur, par exemple, et son verrouillage en position. Des flèches indiquent les mouvements effectués.
- la figure 2 est une vue partielle en perspective illustrant le principe du dispositif selon l'invention. Selon cette figure, le dispositif est positionné en vue de la réception de la carrosserie.
- la figure 3 est une vue partielle selon la figure 2, le dispositif étant représenté après abaissement de la carrosserie en position sur le châssis du véhicule et avant verrouillage en position.
- la figure 4 est une vue partielle selon la figure 3, le dispositif étant représenté après verrouillage en position de la carrosserie.
- la figure 5 est une vue en perspective illustrant dans une première mise en oeuvre le dispositif autorisant la commande en position réceptrice de la carrosserie et son verrouillage en position. Sur cette figure, le dispositif est représenté, la fonction de verrouillage n'étant pas enclenchée, et le dispositif étant déployé pour la réception de la carrosserie.
- la figure 6 est une vue selon la figure 5 du dispositif après abaissement en position de la carrosserie, mais en l'absence de verrouillage de celle-ci.
- la figure 7 est une vue selon la figure 6 du dispositif après abaissement en position de la carrosserie et son verrouillage en position.
- la figure 8 est une vue partielle illustrant l'application des vérins arrière montés sur le châssis du véhicule pour le soulèvement de la carrosserie.

Afin de rendre plus concret l'objet de l'invention, on le décrit maintenant d'une manière non limitative illustrée aux figures des dessins.

L'invention s'applique à des carrosseries, et à des bennes en particulier qui sont un exemple d'application.

Le dispositif de fixation et de verrouillage en position de carrosserie sur le châssis d'un véhicule porteur de la remorque ou semi remorque, selon l'invention met en oeuvre un mécanisme qui est disposé fixement derrière la cabine (C) du véhicule porteur ou à l'avant de la remorque ou semi remorque, et qui est apte à permettre la réception de la carrosserie (B) sur le châssis (FC) du véhicule (V), la carrosserie et le châssis étant agencés avec des moyens complémentaires de verrouillage entre eux, le mécanisme autorisant par des mouvements successifs à la verticale le positionnement de la carrosserie sur le châssis, et transversal pour le verrouillage en position de la carrosserie, la carrosserie étant agencée avec la réception d'un moyen (T) d'accouplement et de traction avec le mécanisme de commande.

Le mécanisme est intégré dans une structure portante (S) fixée derrière la cabine (C) du véhicule ou à l'avant de la remorque ou semi remorque. La carrosserie, quant à elle, est équipée directement sur ses flancs longitudinaux avec des anneaux (1) ou par la réception en fond de carrosserie d'un faux châssis défini par une embase ou des longerons (C1) munis desdits anneaux, le faux châssis étant solidarisé de toute manière appropriée au fond de carrosserie. Par ailleurs, la carrosserie est équipée directement par le faux châssis ou par l'adjonction d'un moyen (T) permettant sa traction horizontale. Par ailleurs, le châssis (FC) du véhicule est agencé le long de ses profils (2) avec des moyens de verrouillage (3) susceptibles de coopérer avec lesdits anneaux par emmanchement lors du positionnement de la carrosserie.

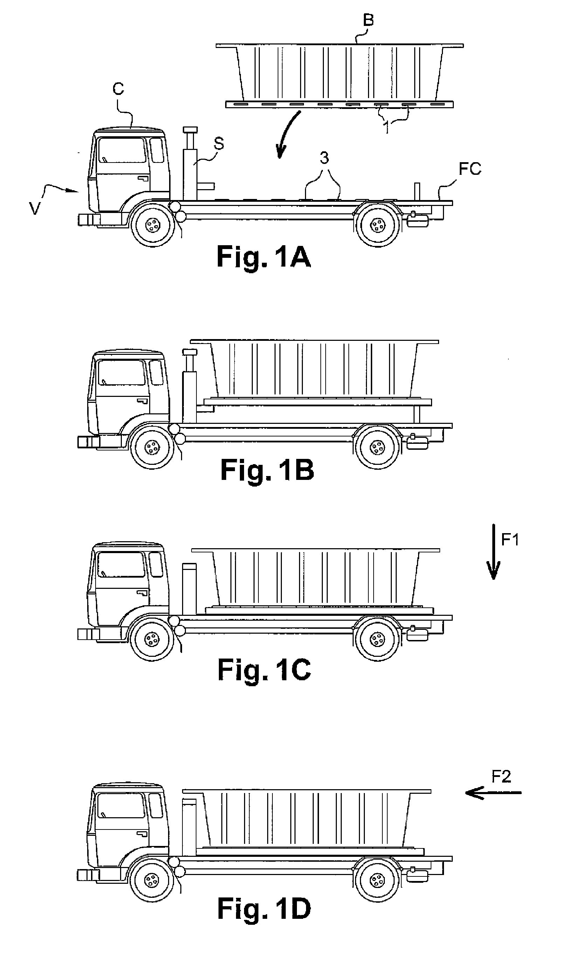

Ainsi, en se référant aux figures schématiques 1A, 1B, 1C et 1D des dessins, la carrosserie (B) est présentée figure 1A au dessus du châssis du véhicule, tandis que le dispositif présente le déploiement des vérins avant (4) intégrés dans la structure portante (S), et des vérins arrière (5) intégrés dans le châssis du véhicule. La figure 1B représente la carrosserie (B) en position par rapport à la structure portante avec les vérins (4) déployés et les vérins arrière (5) déployés. La figure 1C représente l'abaissement de la carrosserie selon la flèche (F1) par repliage desdits vérins. La figure 1D représente le verrouillage de la benne en position par la translation horizontale de la carrosserie selon la flèche (F2) avec auto verrouillage des anneaux (1) et des moyens de verrouillage (3) précités, et ce, grâce à un effort de traction généré par le mécanisme (M) du dispositif de l'invention qui est accouplé avec le moyen (T) solidaire de la carrosserie.

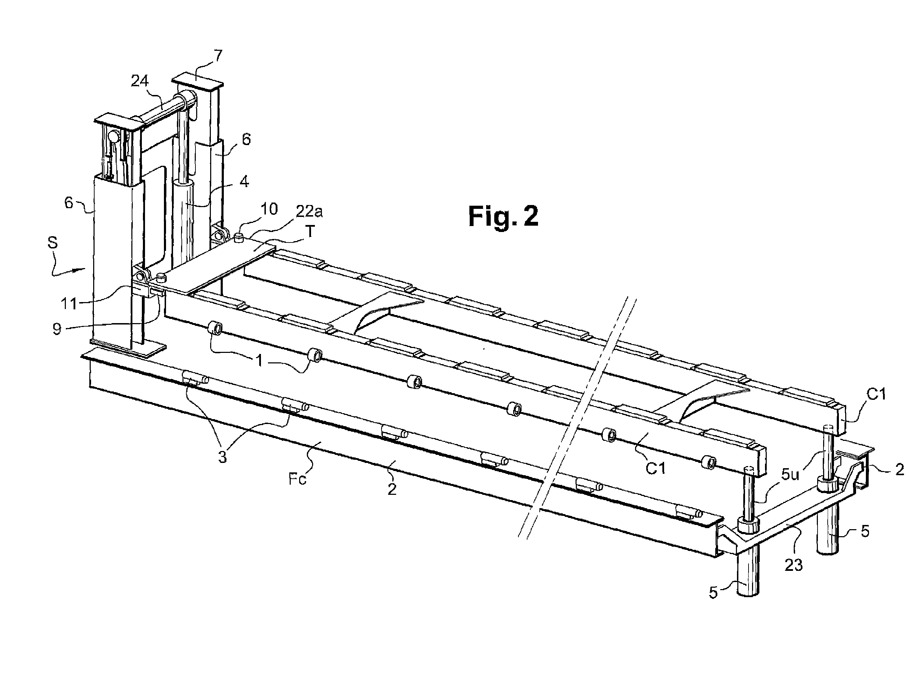

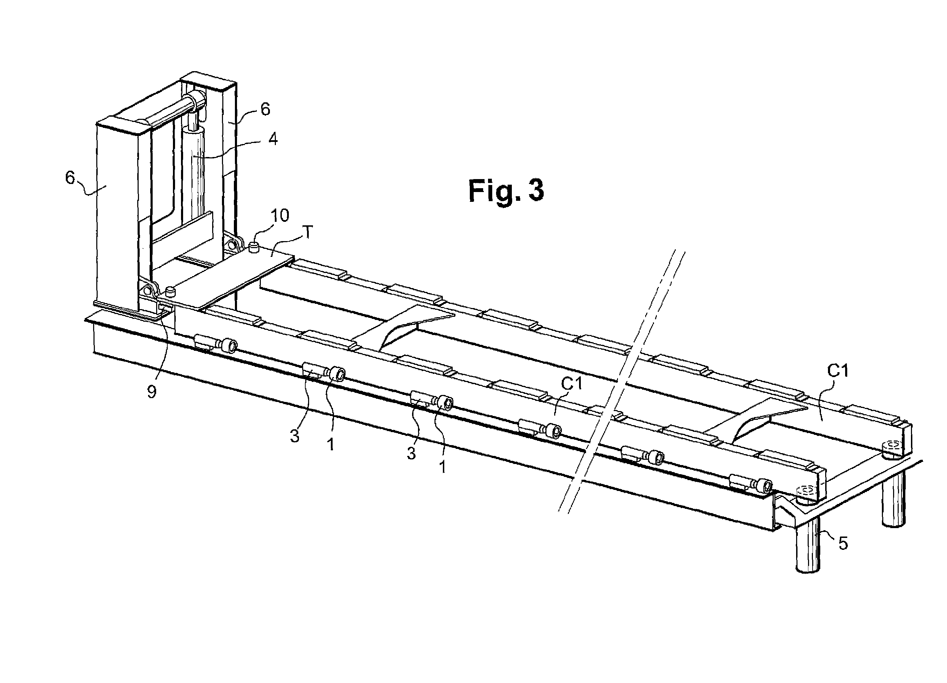

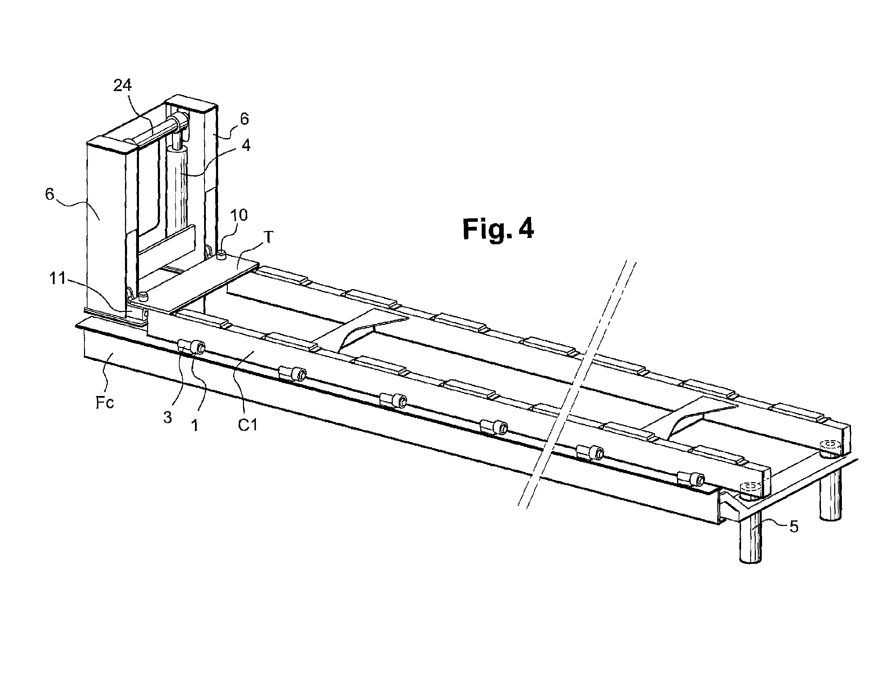

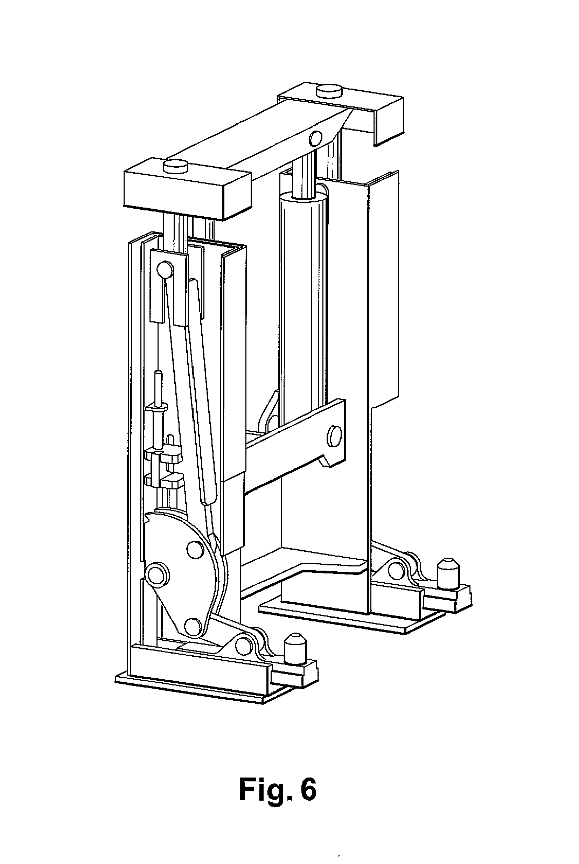

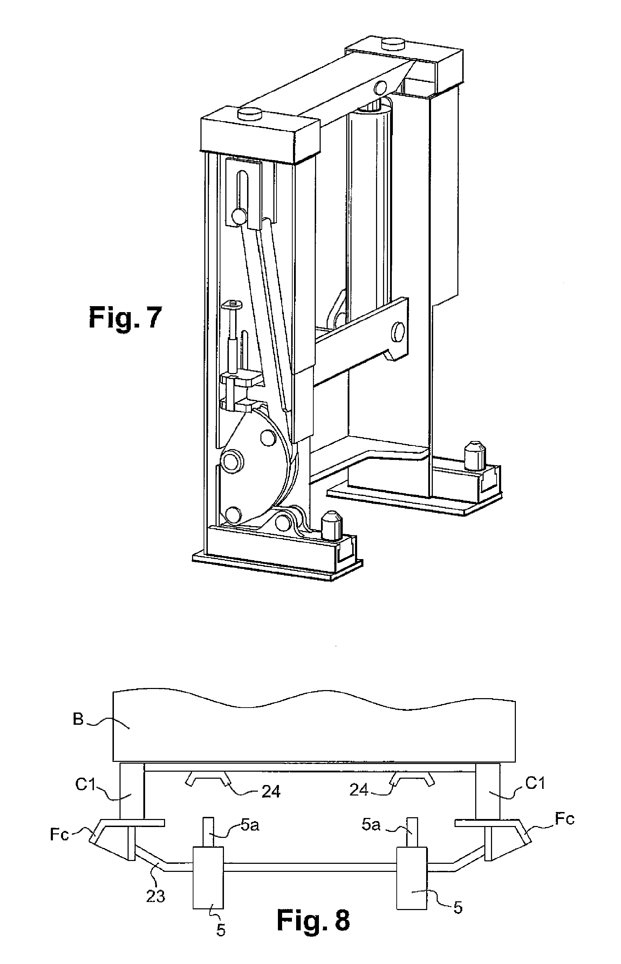

On se réfère maintenant aux figures 2 à 7 qui exposent et illustrent la mise en oeuvre du dispositif selon l'invention, étant considéré que des variantes de certains composants peuvent être envisagés sans modifier la fonctionnalité du dispositif.

La structure portante (S) réceptrice du mécanisme de commande se trouve à l'arrière de la cabine du véhicule, ou à l'avant de la remorque ou semi remorque, en étant fixée sur le faux châssis fixe au véhicule et ses profilés (2) longitudinaux. Cette structure portante peut être fixée à tous autres endroits fixes derrière la cabine du véhicule, en fonction bien sûr de la configuration du véhicule. La structure portante (S) comprend deux colonnes (6) parallèles fixes et entretoisées, ayant une configuration parallélépipédique et recevant intérieurement les mécanismes de commande et les vérins avant précités.

Chacune de ses colonnes reçoit des éléments télescopiques (6a) verticaux permettant le soulèvement contrôlé d'une plateforme (7) commune par un ou des vérins avant. Le ou les vérins avant sont en appui fixe sur un plateau support (8) horizontal disposé entre les colonnes (6) précitées.

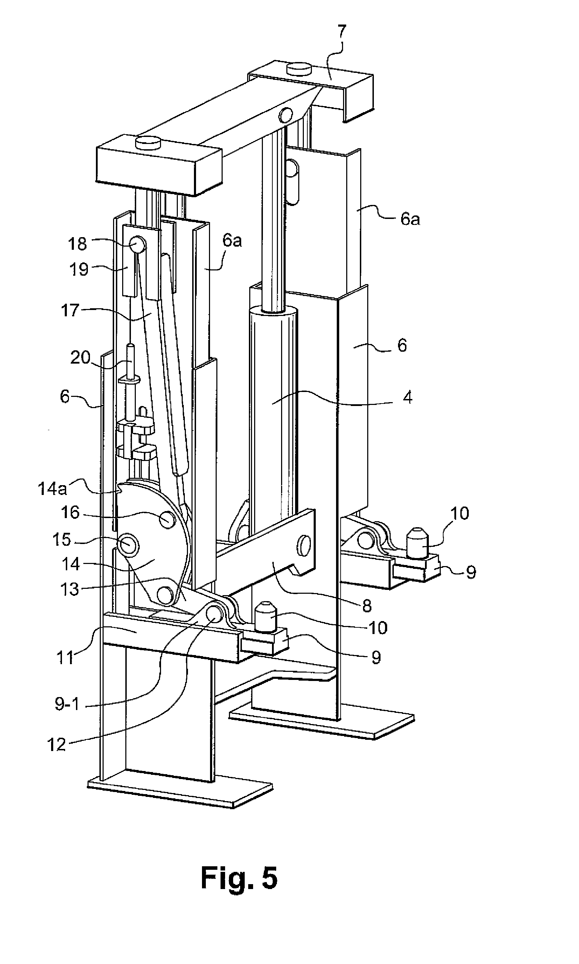

Selon une disposition importante de l'invention, ladite plateforme est accouplée via un mécanisme de transmission à un coulisseau (9) horizontal disposé dans la partie basse du ou des éléments télescopiques (6a) de chaque colonne en présentant en avant un pivot (10) susceptible de coopérer par accrochage avec le moyen (T) associé à la carrosserie pour autoriser sa traction dans un plan horizontal. Chaque coulisseau (9) est guidé dans un profilé horizontal (11) en U pour assurer son déplacement limité. Dans leur partie médiane, les coulisseaux sont agencés avec une forme en chape (9-1) qui permet la fixation d'un axe de liaison (12), d'une biellette (13) à l'une des extrémités de celle-ci. Son autre extrémité est fixée sur une bascule (14) montée pivotante sur un axe (15) positionné fixement et horizontalement dans la colonne (6a). Cette bascule permet la fixation dans son plan supérieur d'un axe d'articulation (16), d'une bielle (17) dont l'autre extrémité est associée à un axe vertical (18) solidaire de la plateforme (7) supérieure. En pratique, comme représenté aux dessins, ladite plateforme soulevée par les vérins avant est guidée dans chaque colonne par ses axes inférieurs (18) qui se déplacent dans des étriers profilés en U (19) limiteurs de déplacement. De par la position des axes sur la bascule, à savoir l'axe de biellette commandant la position du coulisseau, l'axe de rotation de la bascule, et l'axe de la bielle de liaison avec la plateforme, on comprend que le pivotement de la bascule généré par l'action des vérins avant va entraîner la sortie des coulisseaux de leur guide avec l'élévation de la plateforme et des coulisseaux et pivot de par le développement des éléments télescopiques (6a), et en sens inverse lors du repliement des vérins, l'abaissement de la plateforme et la rentrée des coulisseaux, comme il apparaît figures 5 à 7. Des moyens élastiques (20) de contrôle de compression extension sont disposés entre les étriers profilés contrôlant le déplacement de la plateforme d'appui et le profilé télescopique intégré dans chaque colonne. Par ailleurs, la bascule (14) comprend en partie arrière une configuration en crochet (14a) susceptible de coopérer avec une forme en saillie complémentaire établie sur la colonne (6) ou éléments télescopiques (6a). Cette partie crochet a pour fonction d'assurer un verrouillage en position de la bascule en situation de rentrée des coulisseaux pour la réception de la carrosserie.

En se référant à la figure 2, on a représenté le moyen (T) associé à la benne. On a représenté les longerons (C1) munis d'anneaux (1), ces longerons étant dûment entretoisés. A l'avant, le moyen (T) est réalisé par exemple sous forme d'une plaque (22) munie d'ouvertures (22A) pour le passage des pivots (10) montés en débordement vertical des coulisseaux de traction.

Il est bien sûr nécessaire de maintenir par l'arrière la carrosserie à l'aide de vérins arrière. Ceux-ci, par leur fut, sont maintenus et guidés par des traverses (23) de liaison disposées entre les longerons (2) du châssis du véhicule. Les tiges (5A) des vérins arrière (5) sont susceptibles d'autoriser l'appui du faux châssis disposé sur le fond de carrosserie, ou de prendre appui sur le fond de carrosserie ou embase ou profilés (24) de réception selon les mises en oeuvre.

En se référant aux figures 2 à 7 des dessins, on comprend que la carrosserie agencée avec les anneaux disposés directement sur son faux châssis, sera susceptible d'être translatée en position sur différents vérins avant et arrière, tandis que le moyen (T) sous forme de plaque est accouplé sur les pivots des coulisseaux selon les différentes phases représentées aux dessins. Dans une mise en oeuvre, c'est le faux châssis de la carrosserie qui présente directement les ouvertures nécessaires au positionnement et au crochetage sur les pivots des coulisseaux précités.

On a illustré à titre de mise en oeuvre le positionnement des vérins avant par rapport aux colonnes de la structure portante. Sans sortir du cadre de l'invention, l'action desdits vérins peut être exercée sur une barre entretoise positionnée entre les colonnes et dans un plan sous-jacent à la partie supérieure des colonnes.
Les avantages ressortent bien de l'invention. On souligne en particulier :
- l'amélioration considérable dans les conditions de mise en place des bennes, avec une maintenance facilitée ;
- la possibilité quasi universelle d'adapter tous types de carrosseries pour la mise en oeuvre de l'invention.
- une mise en oeuvre répondant aux directives de montage de carrosserie des constructeurs de véhicules industriels.

## Revendications

1. Dispositif de fixation et de verrouillage en position de carrosserie sur le châssis d'un véhicule porteur, remorque ou semi remorque, **caractérisé en ce qu'**il comprend un mécanisme qui est disposé fixement derrière la cabine (C) du véhicule porteur à l'avant de la remorque ou semi remorque, et qui est apte à permettre la réception de la carrosserie (B) sur le châssis (FC) du véhicule (V), la carrosserie et le châssis étant agencés avec des moyens complémentaires de verrouillage (1-3) entre eux, le mécanisme autorisant par des mouvements successifs à la verticale le positionnement de la carrosserie sur le châssis, et transversal pour le verrouillage en position de la carrosserie, la carrosserie étant agencée avec la réception d'un moyen (T) d'accouplement et de traction avec le mécanisme de commande.

2. Dispositif selon la revendication 1, **caractérisé en ce que** le mécanisme est intégré dans une structure portante (S) fixée derrière la cabine (C) du véhicule.

3. Dispositif selon la revendication 2, **caractérisé en ce que** la carrosserie est équipée directement sur ses flancs longitudinaux avec des anneaux (1) ou par la réception en fond de benne d'un faux châssis (C1) muni desdits anneaux, et **en ce que** la carrosserie est équipée d'un moyen (T) permettant sa traction horizontale et pouvant coopérer avec le mécanisme de commande disposé dans la structure portante.

4. Dispositif selon la revendication 1, **caractérisé en ce que** le châssis (FC) du véhicule est agencé le long de ses profils (2) avec des moyens de verrouillage (3) susceptibles de coopérer avec lesdits anneaux par emmanchement lors du positionnement de la carrosserie.

5. Dispositif selon la revendication 2, **caractérisé en ce que** la structure portante (S) réceptrice du mécanisme de commande se trouve à l'arrière de la cabine du véhicule, ou à l'avant de la remorque ou semi remorque, en étant positionnée fixement, sur le châssis fixe au véhicule et ses profilés (2) longitudinaux, et **en ce que** la structure portante (S) comprend deux colonnes (6) parallèles fixes et entretoisées, ayant une configuration parallélépipédique et recevant intérieurement les mécanismes (M) de commande et les vérins (4) avant précités.

6. Dispositif selon la revendication 5, **caractérisé en ce que** chaque colonne reçoit des éléments télescopiques (6a) verticaux permettant le soulèvement contrôlé d'une plateforme (7) commune par un ou des vérins avant (4), et **en ce que** le ou les vérins avant (4) sont en appui fixe sur un plateau support (8) horizontal disposé entre les colonnes (6).

7. Dispositif selon la revendication 5, **caractérisé en ce que** ladite plateforme est accouplée via un mécanisme de transmission à un coulisseau (9) horizontal disposé dans la partie basse des éléments télescopiques (6a) de chaque colonne (6) en présentant en avant un pivot (10) susceptible de coopérer par accrochage avec le moyen (T) associé à la carrosserie pour autoriser sa traction dans un plan horizontal, et **en ce que** chaque coulisseau (9) est guidé dans un profilé horizontal (11) en U pour assurer son déplacement limité.

8. Dispositif selon la revendication 7, **caractérisé en ce que** dans leur partie médiane, les coulisseaux sont agencés avec une forme en chape (9-1) qui permet la fixation d'un axe de liaison (12), d'une biellette (13) à l'une des extrémités de celle-ci, et **en ce que** l'autre extrémité de la biellette est fixée sur une bascule (14) montée pivotante sur un axe (15) positionné fixement et horizontalement dans la colonne (6a), et **en ce que** cette bascule permet la fixation dans son plan supérieur d'un axe d'articulation (16), d'une bielle (17) dont l'autre extrémité est associée à un axe vertical (18) solidaire de la plateforme (7) supérieure.

9. Dispositif selon la revendication 8, **caractérisé en ce que** ladite plateforme soulevée par les vérins avant est guidée dans chaque colonne par ses axes inférieurs (18) qui se déplacent dans des étriers profilés en U (19) limiteurs de déplacement.

10. Dispositif selon la revendication 7, **caractérisé en ce que** de par la position des axes sur la bascule, à savoir l'axe de biellette commandant la position du coulisseau, l'axe de rotation de la bascule, et l'axe de la bielle de liaison avec la plateforme, le pivotement de la bascule généré par l'action des vérins avant autoriser la sortie des coulisseaux de leur guide avec l'élévation de la plateforme et des coulisseaux et pivots d'appui de la carrosserie, et en sens inverse lors du repliement des vérins, l'abaissement de la plateforme et des coulisseaux et la rentrée desdits coulisseaux.

11. Dispositif selon la revendication 2, **caractérisé en ce que** des moyens élastiques (20) de contrôle de compression extension sont disposés entre les étriers profilés contrôlant le déplacement de la plateforme d'appui et le profilé télescopique intégré dans chaque colonne.

12. Dispositif selon la revendication 7, **caractérisé en ce que** le moyen (T) est réalisé sous forme d'une plaque (22) munie d'ouvertures (22A) pour le passage des pivots (10) montés en débordement vertical des coulisseaux de traction.

13. Dispositif selon la revendication 1, **caractérisé en ce que** les vérins arrière (5) sont maintenus et guidés par des entretoises (23) de liaison disposées entre les profilés du faux châssis, et **en ce que** les tiges (5A) des vérins arrière (5) sont susceptibles d'autoriser l'appui des longerons disposés sur la benne, ou de prendre appui sur le fond de benne ou embase qui peut être rapportée.

14. Dispositif selon la revendication 8, **caractérisé en ce que** la bascule présente une partie crochet (14a) susceptible de verrouiller en position la bascule.
